# EUROPÄISCHE PATENTANMELDUNG

(11) **EP 0 565 739 A1**
(43) Veröffentlichungstag der Anmeldung: **20.10.1993**
(21) Anmeldenummer: 92105237.9
(22) Anmeldetag: 26.03.1992
(51) Int. Cl.: H04B 10/20

(54) **Verfahren zur Zuteilung von Übertragungszeiträumen in einem passiven optischen Netz**

(71) Anmelder: SIEMENS AKTIENGESELLSCHAFT, D-80333 München (DE)
(72) Erfinder: Glade, Martin, Dr.-Ing., W-8000 München 70 (DE); Keller, Hendrik, Dr.-Ing., W-8000 München 40 (DE)

(57) **Zusammenfassung**

In einem passiven optischen Netz werden die von einer Mehrzahl von Teilnehmerabschlußeinrichtungen abgegebenen Nachrichtenzellen einem einzigen Anschluß einer Kopfstelle eines Vermittlungssystems zugeführt; dabei sendet eine jeweilige Teilnehmerabschlußeinrichtung nur auf eine nach Maßgabe der für sie festgelegten Nachrichtenzellenrate ermittelte und von der Kopfstelle abgegebene Sendeerlaubnis eine zu einem Datenblock zusammengefaßte Anzahl aufeinanderfolgender Nachrichtenzellen, denen eine Folge von Einmeßzeichen vorangestellt ist.

## Beschreibung

Laufende Bestrebungen, die Teilnehmer von Kommunikationssystemen mit einem Teilnehmeranschluß auszustatten, der sowohl Schmalband- als auch Breitbanddienste unterstützt, haben zu der Entwicklung von passiven optischen Netzen geführt, bei denen eine Mehrzahl von Teilnehmerabschlußeinrichtungen über Glasfasern und passive Koppler mit einem einzigen Anschluß eines Vermittlungssystems verbunden sind. Zur Übertragung von Daten ist in diesen passiven optischen Netzen ein asynchrones Übertragungsverfahren vorgesehen, bei dem Daten im Nutzdatenteil von bedarfsweise übertragenen Nachrichtenzellen übertragen werden. In einem passiven optischen Netz müssen die Glasfaserstrecken zwischen den einzelnen Teilnehmerabschlußeinrichtungen und dem Anschluß des Vermittlungssystems auf eine gleiche Laufzeit eingemessen werden; weiter muß jede Teilnehmerabschlußeinrichtung vor jedem erneuten Aussenden von Nachrichtenzellen eine Reihe von Einmeßzeichen aussenden, mit Hilfe derer eine Empfangseinrichtung in dem Anschluß des Vermittlungssystems auf die Amplitude und die Phase der gerade ankommenden Nachrichtenzelle eingeregelt wird. Sowohl das Einmessen der Glasfaserstrecken als auch die Übertragung der Einmeßzeichen benötigt Übertragungskapazität, die nicht für die Übertragung von durch Nachrichtenzellen gegebener Nutzinformation zur Verfügung steht.

Hierzu kann die Transportbitrate in dem passiven optischen Netz gegenüber der Transportbitrate in dem Vermittlungssystem, mit dem das passive optische Netz Daten austauscht, erhöht sein, wodurch Übertragungskapazität für die Einmeß- und Regelvorgänge in dem passiven optischen Netz bereitgestellt wird.
Bei diesem Ansatz macht sich der Aufwand für die in dem passiven optischen Netz erhöhte Transportbitrate nachteilig bemerkbar.

Nach einem anderen Ansatz, wie er in Globecom 1990, S. 206 ...211 "A B-ISDN Local Distribution System Based on a Passive Optical Network" beschrieben ist, wird die in dem mit dem passiven optischen Netz verbundenen Vermittlungssystem durch den synchronen Rahmen beanspruchte Übertragungskapazität im passiven optischen Netz zur Voranstellung von zwei Byte langen Einmeßzeichen vor jede von einer Teilnehmerabschlußeinrichtung zum Vermittlungsabschluß übertragene Nachrichtenzelle ausgenutzt. Dabei macht es sich nachteilig bemerkbar, daß zum einen die Amplitudenregelung bei so kurzen Einmeßzeichen eines erhöhten Regelungsaufwands bedarf und zum anderen das Einmessen einer Glasfaserstrecke, wie es etwa das erneute Zuschalten einer Teilnehmerabschlußrichtung erfordert, eine kurzzeitige Unterbrechung der bereits eingerichteten Verbindungen bedingt.

Die Erfindung löst das Problem, ein Zuteilungsverfahren für ein passiven optisches Netz anzugeben, das die genannten Nachteile vermeidet.

Das Problem wird gelöst durch ein Verfahren zur Zuteilung von Übertragungszeiträumen für ein Übertragungssystem mit einer Mehrzahl von Teilnehmerstellen, die über Glasfasern und passive Koppler mit einer sämtlichen Teilnehmerstellen gemeinsamen Kopfstelle verbunden sind, bei dem
- die einer Teilnehmerstelle zugeführten oder von ihr abgegebenen Daten in Nachrichtenzellen im Zuge einer virtuellen Verbindung nach einem asynchronen Übertragungsverfahren übertragen werden,
- jede Nachrichtenzelle einen Nutzdatenteil konstanter Länge zur Aufnahme der Daten und einen dem Nutzdatenteil vorangestellten Nachrichtenzellenkopf konstanter Länge aufweist,
- für jede virtuelle Verbindung eine Nachrichtenzellenrate eingerichtet ist,
- der Zählerstand eines für jede virtuelle Verbindung kopfstellenseitig vorgesehenen Zählers nach Maßgabe der eingerichteten Nachrichtenzellenrate regelmäßig erhöht wird,
- für einen Zähler, dessen Zählerstand einen vorgegebenen Zählerstand überschreitet, ein Zustandszeichen gesetzt wird,
- die Zähler auf das Vorhandensein von gesetzten Zustandszeichen abgefragt werden,
- eine Teilnehmerstelle, deren zugehöriger Zähler bei der Abfrage ein gesetztes Zustandszeichen aufweist, eine Sendeerlaubnis für eine größtmögliche, dem jeweiligen Zählerstand entsprechende Anzahl von Nachrichtenzellen erhält, wobei der Zählerstand dieses Zählers um einen dieser Anzahl entsprechenden Betrag erniedrigt und das Zustandszeichen bei Unterschreiten des vorgegebenen Zählerstandes zurückgesetzt wird und
- eine Teilnehmerstelle, die eine Sendeerlaubnis erhalten hat, eine Folge von Einmeßzeichen und unmittelbar daran anschließend eine der jeweiligen Sendeerlaubnis entsprechende Anzahl von Nachrichtenzellen zur Kopfstelle hin aussendet.

Das erfindungsgemäße Verfahren, bei dem das passive optische Netz mit der gleichen Transportbitrate wie das mit dem passiven optischen Netz verbundene Vermittlungssystem betrieben werden kann, bringt neben einer Festlegbarkeit einer großzügigen Anzahl von Einmeßzeichen eine Anpassung der Länge von zu Datenblöcken zusammengefaßten Nachrichtenzellen an die gerade zur Verfügung stehende Übertragungskapazität mit sich. Bei zunehmender Auslastung wird sich nämlich für eine jeweilige Teilnehmerabschlußeinrichtung der zeitliche Abstand zwischen zwei Sendeerlaubnissen verlängern, was insbesondere bei hochbitratigen Verbindungen zur Zusammenfassung einer Mehrzahl von Nachrichtenzellen zu einem Datenblock führt, dem nur eine Folge von Einmeßzeichen vorangestellt ist, womit sich der Anteil von Einmeßzeichen je Nachrichtenzelle verringert; niederbitratige Verbindungen, die zeitkritisch sein können, bilden dabei bis hin zu hohen Auslastungswerten Datenblöcke mit jeweils nur einer Nachrichtenzelle.

Gemäß einer besonderen Ausgestaltung der Erfindung ist die größtmögliche Anzahl von zu einem Datenblock zusammengefaßten Nachrichtenzellen durch einen festgesetzten Maximalwert begrenzt.
Diese Maßnahme begrenzt einerseits das gehäufte Auftreten von Nachrichtenzellen einer Verbindung und andererseits das Wiederholintervall der Zählerabfrage.

Gemäß einer weiteren Ausführung der Erfindung wird eine Teilnehmerabschlußeinrichtung, nachdem eine zyklische Abfrage sämtlicher übrigen Teilnehmerabschlußeinrichtungen, für die eine Verbindung aufgebaut ist, kein gesetztes Zustandszeichen erbracht hat, eine Sendeerlaubnis für eine zusätzliche Nachrichtenzelle erteilt, ohne daß der Zählerstand des zugehörigen Zählers erniedrigt wird.
Diese Maßnahme gestattet die Übertragung von teilnehmerabschlußeinrichtungsspezifischen Informationen an die Kopfstelle über die festgesetzte Nachrichtenzellenrate hinaus.

Gemäß einer weiteren Ausgestaltung der Erfindung schöpft eine Teilnehmerabschlußeinrichtung die in der Sendeerlaubnis bezeichnete Anzahl von Nachrichtenzellen aus, indem sie gegebenenfalls Leerzellen aussendet.
Durch diese Maßnahme werden Leerzeiten auf der Faser vermieden und ein regelmäßiges Ansprechen der Teilnehmerabschlußeinrichtungen auch bei geringem Verkehr erleichtert.

Die Erfindung wird nun als Ausführungsbeispiel in zum Verständnis erforderlichen Umfang anhand von Figuren beschrieben.

Dabei zeigen
- Fig. 1: die Prinzipdarstellung eines passiven optischen Netzes
- Fig. 2 und Fig. 3: jeweils ein Flußdiagramm.

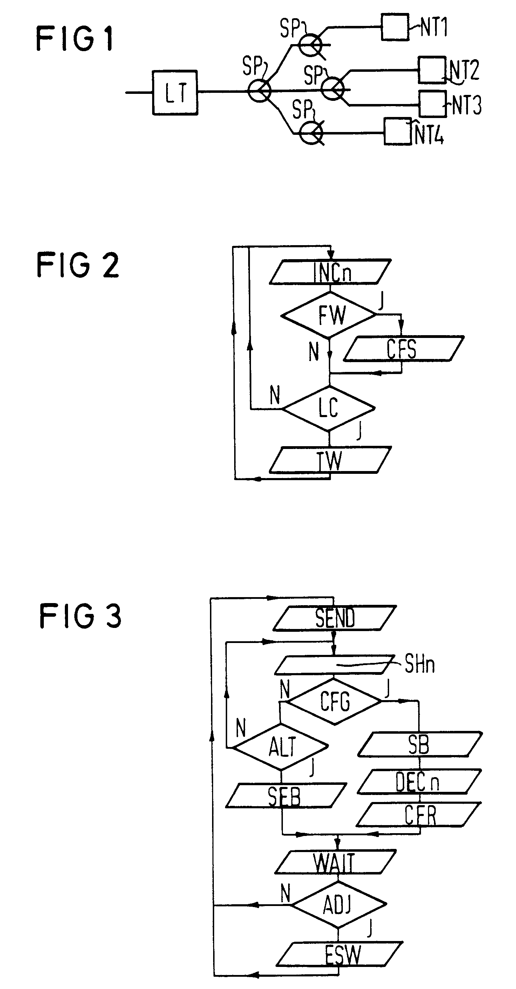

Fig. 1 zeigt ein an sich z.B. aus British Telecom Technological Journal, Vol.7, No. 2, April 1989, S. 151-160, bekanntes Übertragungssystem, bei dem eine Mehrzahl von Teilnehmerstellen mit ihren Teilnehmerabschlußeinrichtungen NT1...NT4 über Glasfasern und passive Koppler SP1...SP4 mit einer Kopfstelle LT eines Vermittlungssystems verbunden sind.

In dem Vermittlungssystem und dem Übertragungssystem werden Daten in binärer Datenstruktur nach einem asynchronen Übertragungsverfahren in Nachrichtenzellen übertragen. Die Nachrichtenzellen mögen jeweils einen Nutzdatenteil mit einer Länge von im Ausführungsbeispiel 48 Bytes und einen dem Nutzdatenteil vorangestellten Nachrichtenzellenkopf mit einer Länge von im Ausführungsbeispiel 5 Bytes aufweisen. Der Nachrichtenzellenkopf enthält die Bezeichnung der Verbindung, zu der die betreffende Nachrichtenzelle gehört. Auf den Glasfaserstrecken möge im Ausführungsbeispiel die Transportbitrate 155,52 Mbit/s und die Nutzbitrate 149,76 Mbit/s betragen.

Die von der Kopfstelle zu den Teilnehmerabschlußeinrichtungen mit einer ersten Wellenlänge über die Glasfasern und passiven Koppler ausgesandten Nachrichtenzellen erreichen sämtliche Teilnehmerabschlußeinrichtungen, wobei eine jeweilige Teilnehmerabschlußeinrichtung nur die Nachrichtenzellen auswertet, die auf Grund ihrer Bezeichnung im Nachrichtenzellenkopf als verbindungszugehörig gekennzeichnet sind.

Von den Teilnehmerabschlußeinrichtungen zu der Kopfstelle zu übertragende Nachrichtenzellen werden im sog. Wellenlängenmultiplexverfahren bei einer zweiten Wellenlänge über die Glasfasern und die passiven Koppler übertragen. Nachrichtenzellen, die von verschiedenen Teilnehmerabschlußeinrichtungen zu der Kopfstelle hin ausgesandt werden, dürfen sich einerseits nicht zeitlich überschneiden, sollten aber andererseits ohne nennenswerten Abstand aufeinanderfolgen. Zur Vermeidung von Überschneidungen ist vorgesehen, daß eine Teilnehmerabschlußeinrichtung nur dann Nachrichtenzellen in Richtung zur Kopfstelle aussendet, wenn sie von der Kopfstelle eine Sendeerlaubnis erhalten hat (polling); dabei werden erfindungsgemäß jeweils ebenso viele aufeinanderfolgende Nachrichtenzellen ausgesandt, wie in der aktuellen Sendeerlaubnis bezeichnet sind. Für den Fall, daß in einer Teilnehmerabschlußeinrichtung keine der Sendeerlaubnis entsprechende Anzahl von Nachrichtenzellen bereitsteht, kann die Anzahl von Nachrichtenzellen gemäß der Sendeerlaubnis durch Aussenden von Leerzellen ausgeschöpft werden. Unter Leerzelle soll eine Nachrichtenzelle verstanden werden, die in ihrem Datenteil keine Daten enthält und die nicht an das Vermittlunssystem weitergeleitet wird.

Im allgemeinen sind die Laufzeiten zwischen den einzelnen Teilnehmerabschlußeinrichtungen und der Kopfstelle unterschiedlich, was auf unterschiedliche Wegstrecken und Temperaturschwankungen der einzelnen Glasfasern zurückzuführen ist. Zum Ausgleich dieser Laufzeitunterschiede ist für jede Teilnehmerabschlußeinrichtung eine Verzögerungseinrichtung vorgesehen; dabei gibt die Teilnehmerabschlußeinrichtung mit der längsten Laufzeit die minimale Laufzeit für sämtliche Teilnehmerabschlußeinrichtungen vor. Ein Einmessen auf gleiche Laufzeiten zwischen den Teilnehmerabschlußeinrichtungen und der Kopfstelle stellt eine nahezu phasenstarre Ankunft der Nachrichtenzellen bei der Kopfstelle sicher. Das Einmessen einer teilnehmerabschlußeinrichtungsindividuellen Verzögerungseinrichtung, die in der Teilnehmerabschlußeinrichtung angeordnet sein kann, erfolgt bei Verbindungsaufbau und wird in regelmäßigen Zeitabständen von beispielsweise einer Sekunde wiederholt.

Die Glasfaserstrecken zwischen den einzelnen Teilnehmerabschlußeinrichtungen und der Kopfstelle weisen im allgemeinen unterschiedliche Dämpfungen auf, so daß die Binärzeichen von von unterschiedlichen Teilnehmerabschlußeinrichtungen abgegebenen Nachrichtenzellen unterschiedliche Amplituden aufweisen können. Eine kopfstellenseitig vorgesehene Empfangseinrichtung benötigt eine gewisse Zeit zur Einregelung auf die Amplitude einer gerade ankommenden Nachrichtenzelle, wobei der Aufwand für die Einregelung umso höher ist, je weniger Zeit dafür zur Verfügung steht. Zur Vermeidung der Verstümmelung von Nutzinformation ist vorgesehen, daß eine Teilnehmerabschlußeinrichtung vor jedem erneuten Aussenden von Nachrichtenzellen eine festgelegte Anzahl von z.B. 64 bit Einmeßzeichen aussendet, an die sich die auszusendenden Nachrichtenzellen unmittelbar anschließen. Neben der bereits erwähnten Einregelung auf die Amplitude einer gerade ankommenden Nachrichtenzelle ermöglichen die Einmeßzeichen eine Feinanpassung an die Phasenlage der gerade ankommenden Nachrichtenzellen.

Die Zeit, die für das Einmessen der teilnehmerabschlußeinrichtungsindividuellen Verzögerungseinrichtungen und die Übertragung der Einmeßzeichen benötigt wird, steht nicht für die Übertragung von durch Nachrichtenzellen gegebene Nutzinformation zur Verfügung; bei einer Übertragung von Einmeßzeichen vorgegebener Länge mit jeder Nachrichtenzelle wird ein erheblicher Teil der nicht für die Übertragung von Nutzinformation zur Verfügung stehenden Übertragungskapazität beansprucht. Gemäß der Erfindung können eine Mehrzahl von von einer Teilnehmerabschlußeinrichtung abgegebener Nachrichtenzellen zu einem Datenblock zusammengefaßt werden, wobei jedem Datenblock Einmeßzeichen konstanter Länge vorangestellt werden, so daß sich der Anteil der Einmeßzeichen an der beanspruchten Übertragungskapazität gegenüber der Nutzinformation verringert. Eine minimale Anzahl von einer Nachrichtenzelle pro Datenblock kann dennoch, insbesondere bei Verbindungen mit niedriger Datenrate von z.B. 64 kbit/s gegeben sein. Die durch die Ansammlung von Nachrichtenzellen zu einem Datenblock bedingte Verzögerung macht sich um so weniger bemerkbar, je höher die von einer Teilnehmerabschlußeinrichtung abgegebene Nachrichtenzellenrate ist.

Für jede Teilnehmerabschlußeinrichtung ist ein Zähler vorgesehen, dessen Zählerstand nach Maßgabe von zwei nachfolgend beschriebenen Abläufen erhöht bzw. erniedrigt wird. Die Zähler sind vorzugsweise in der Kopfstelle des Vermittlungssystems angeordnet.

Fig. 2 zeigt ein Flußdiagramm, demzufolge während eines Inkrementierungsintervalls der Zählerstand sämtlicher Zähler um einen jeweiligen für die zugehörige Teilnehmeranschlußeinrichtung eingerichteten Übertragungsbitrate entsprechenden Betrag erhöht wird. Der Betrag, um den der Zählerstand eines jeweiligen Zählers erhöht wird, möge durch ein Vielfaches eines in sämtlichen möglichen Übertragungsbitraten enthaltenen größten gemeinsamen Teilkanals gegeben sein. Im Ausführungsbeispiel möge ein größter gemeinsamer Teilkanal eine Übertragungsbitrate von 64 kbit/s aufweisen.

Nach dem obersten Ausführungsfeld INCn nach Fig. 2 wird ein jeweiliger Zähler um den seinem Vielfachen von Teilkanälen entsprechenden Betrag erhöht. Gemäß dem nachfolgenden Entscheidungsfeld FW wird überprüft, ob der Zählerstand des gerade betrachteten Zählers eine vorgegebene Betragshöhe FW überschritten hat. Das Überschreiten der Betragshöhe FW zeigt an, daß bei der zugehörigen Teilnehmerabschlußeinrichtung voraussichtlich mindestens eine Nachrichtenzelle zur Aussendung bereitsteht. Für den Fall, daß die Betragshöhe FW überschritten ist (J), wird gemäß dem Ausführungsfeld CFS für den betreffenden Zähler ein Zustandszeichen gesetzt. Das Setzen des Zustandszeichens kann durch den Überlauf eines Binärzählers mit vorgegebener Bitbreite gegeben sein. Im Ausführungsbeispiel möge das Setzen eines Zustandszeichens bei Überschreitung des höchsten mit 8 bit darstellbaren Betrages erfolgen. Für den Fall, daß in dem Entscheidungsfeld FW die Betragshöhe FW für den gerade betrachteten Zähler nicht überschritten ist (N) oder gemäß dem Ausführungsfeld CFS für den betrachteten Zähler ein Zustandszeichen gesetzt wurde, wird mit dem Entscheidungsfeld LC fortgefahren. In dem Entscheidungsfeld LC wird überprüft, ob sämtliche Zähler von Teilnehmeranschlußeinrichtungen, die gerade Verbindungen aufgebaut haben während eines aktuellen Inkrementierungsintervalls inkrementiert worden sind. Für den Fall, daß noch mindestens ein Zähler inkrementiert werden muß (N), wird mit dem Ausführungsfeld INCn fortgefahren. Für den Fall, daß sämtliche Zähler inkrementiert sind (J), wird mit dem Ausführungsfeld TW fortgefahren. In dem Ausführungsfeld TW wird das Ende des aktuellen Inkrementierungsintervalls abgewartet, um dann ein neues Inkrementierungsintervall mit dem Ausführungsfeld INCn zu beginnen. Im Ausführungsbeispiel möge ein Inkrementierungsintervall die Übertragungsdauer von 3 645 bit betragen.

Das in Fig. 3 dargestellte Ablaufdiagramm bewirkt die Vergabe von Sendeerlaubnissen für eine jeweilige Anzahl von Nachrichtenzellen für die einzelnen Teilnehmerabschlußeinrichtungen. Durch das Setzen von Zustandszeichen bei dem Ablaufdiagramm gemäß Fig. 2 reduziert sich die Abfrage, ob bei einer jeweiligen Teilnehmerabschlußeinrichtung voraussichtlich mindestens eine Nachrichtenzelle zur Aussendung bereitsteht auf die Abfrage dieser Zustandszeichen. Gemäß dem Ablaufdiagramm nach Fig. 3 werden sämtliche Teilnehmerabschlußeinrichtungen, für die gerade eine Verbindung aufgebaut ist, auf das Vorliegen von gesetzten Zustandszeichen hin abgefragt. Nach dem Ausführungsfeld SHn wird von dem zuletzt abgefragten Zähler zu dem nächstfolgenden Zähler übergegangen. Gemäß dem Entscheidungsfeld CFG wird der gerade betrachtete Zähler auf ein gesetztes Zustandszeichen hin abgefragt. Für den Fall, daß für den betrachteten Zähler ein Zustandszeichen gesetzt ist (J), wird gemäß dem Ausführungsfeld SB eine Sendeerlaubnis für die zugehörige Teilnehmerabschlußeinrichtung bereitgestellt. Die Sendeerlaubnis bezeichnet dabei die maximale Anzahl von Nachrichtenzellen, die nach Maßgabe des aufgelaufenen Zählerstandes des betreffenden Zählers in der zugehörigen Teilnehmerabschlußeinrichtung zu erwarten ist. Dabei kann vorgesehen sein, daß die maximale Anzahl durch einen festgesetzten Maximalwert begrenzt ist. Gemäß dem Ausführungsfeld DECn wird der Zählerstand des gerade betrachteten Zählers um den der zur Aussendung bereitgestellten Anzahl von Nachrichtenzellen entsprechenden Betrag erniedrigt. Weist beispielsweise der Zählerstand des gerade abgefragten Zählers einen aktuellen Zählerstand von 768 auf und entspricht ein Zählerstand von 256 einer zur Aussendung bereitstehenden Nachrichtenzelle, so wird eine Sendeerlaubnis für drei Nachrichtenzellen bereitgestellt und der Zählerstand auf einen Betrag von 219 herabgesetzt. Gemäß dem Ausführungsfeld CFR wird das Zustandszeichen des gerade betrachteten Zählers zurückgesetzt, wenn der Zählerstand den vorgegebenen Zählerstand unterschreitet. Gemäß dem Ausführungsfeld WAIT wird so lange gewartet, bis die Übertragungsdauer für die Aussendung der Anzahl von Nachrichtenzellen entsprechend der unmittelbar vorausgehenden Sendeerlaubnis verstrichen ist.

Hatte aber die Abfrage in dem Entscheidungsfeld CFG ergeben, daß für den betrachteten Zähler kein Zustandszeichen gesetzt ist (N), so wird mit dem Entscheidungsfeld ALT fortgefahren. In dem Entscheidungsfeld ALT wird ausgehend von dem Zähler, dessen zugehörige Teilnehmerabschlußeinrichtung zuletzt eine Nachrichtenzelle ausgesendet hat, geprüft, ob in sämtlichen anderen Teilnehmerabschlußeinrichtungen, für die gerade Verbindungen aufgebaut sind, keine Nachrichtenzellen zur Aussendung bereitstehen. Sind noch nicht sämtliche anderen Teilnehmerabschlußeinrichtungen abgefragt (N), so wird mit dem Ausführungsfeld SHn weiterverfahren, bei dem zu dem nächstfolgenden Zähler übergegangen wird. Dieser Zähler wird auf das Vorliegen eines gesetzten Zustandszeichens hin abgefragt. Weist bei dieser zyklischen Abfrage der Zustandszeichen auch nur ein Zähler ein gesetztes Zustandszeichen auf, so wird, wie weiter oben für das Entscheidungsfeld CFG für den Fall von (J) beschrieben, weiterverfahren.

Hier soll nun angenommen werden, daß gemäß dem Entscheidungsfeld ALT in sämtlichen anderen Teilnehmerabschlußeinrichtungen, für die Verbindungen aufgebaut sind, keine Nachrichtenzellen zur Aussendung bereitstehen (J); dann wird mit dem Ausführungsfeld SEB weiterverfahren, bei dem die Sendeerlaubnis für eine Extra-Nachrichtenzelle bereitgestellt wird. Extra-Nachrichtenzelle bezeichnet eine Nachrichtenzelle, die ausgesendet wird, ohne daß der Zählerstand für die Teilnehmerabschlußeinrichtung, die die Erlaubnis zur Aussendung der Extra-Nachrichtenzelle erhält, erniedrigt wird. Von dem Ausführungsfeld SEB wird weiter mit dem Ausführungsfeld WAIT weiterverfahren, das weiter oben bereits abgehandelt wurde. Von dem Ausführungsfeld WAIT wird mit dem Entscheidungsfeld ADJ weiterverfahren. In dem Entscheidungsfeld ADJ wird geprüft, ob für die Teilnehmerabschlußeinrichtung, für die gerade eine Sendeerlaubnis bereitgestellt wurde, ein Einmessen der zugehörigen Verzögerungseinrichtung erforderlich ist. Das Erfordernis des Einmessen kann durch ein Zeitkriterium, das im Ausführungsbeispiel eine Zeitspanne von einer Sekunde umfassen möge, gegeben sein. Für den Fall, daß ein Einmessen erforderlich ist (J), wird mit dem Ausführungsfeld ESW fortgefahren, bei dem die Zeitspanne für das Einmessen der betreffenden Verzögerungseinrichtung abgewartet wird.

Für den Fall, daß gemäß dem Entscheidungsfeld ADJ kein Einmessen erforderlich ist (N) oder daß die Wartezeit nach dem Ausführungsfeld ESW abgelaufen ist, wird mit dem Ausführungsfeld SEND weiterverfahren. Gemäß dem Ausführungsfeld SEND wird der betreffenden Teilnehmerabschlußeinrichtung eine Sendeerlaubnis für eine entsprechende Anzahl von Nachrichtenzellen erteilt. Eine Teilnehmerabschlußeinrichtung, die eine Sendeerlaubnis erhalten hat, reagiert mit der Aussendung der Einmeßzeichen, an die sich unmittelbar eine Anzahl von Nachrichtenzellen entsprechend der Sendeerlaubnis anschließen. Sollten in einer Teilnehmerabschlußeinrichtung nicht ebenso viele Nachrichtenzellen zur Aussendung bereitstehen, wie in der Sendeerlaubnis bezeichnet sind, so kann die betreffende Teilnehmerabschlußeinrichtung die Sendeerlaubnis durch Aussendung einer Anzahl von Leerzellen ausschöpfen. Leerzellen sind solche Nachrichtenzellen, die in ihrem Datenteil keine Information enthalten und die nicht an das Vermittlungssystem weitergeleitet werden.

Während des Einmessens einer Verzögerungsleitung wird, wie bereits erwähnt, keine Nutzinformation von den einzelnen Teilnehmerabschlußeinrichtungen zu der Kopfstelle übertragen. Ist in der Kopfstelle ein FIFO-Speicher vorgesehen, der auf einem erhöhten Füllstand mit von den Teilnehmerabschlußeinrichtungen ausgesendeten Nachrichtenzellen gehalten wird, so kann das Einmessen von Verzögerungseinrichtungen der einzelnen Teilnehmerabschlußeinrichtungen für das Vermittlungssystem unbemerkt bleiben, wenn aus dem FIFO-Speicher regelmäßig Nachrichtenzellen ausgelesen werden und sich damit der Füllstand während des Einmessens erniedrigt; unmittelbar nach einem Einmeßvorgang weisen die Zähler im Mittel erhöhte Zählerstände auf, was zur Aussendung von längeren Datenblöcken und damit zu einer kurzfristig erhöhten Datenrate führt, wodurch der FIFO-Speicher wiederum einen erhöhten Füllstand erreicht. Für das Vermittlungssystem ergibt sich ein kontinuierlicher Datenstrom, der um die Dauer, die das Einmessen benötigt, verzögert ist.

## Patentansprüche

1. Verfahren zur Zuteilung von Übertragungszeiträumen für ein Übertragungssystem mit einer Mehrzahl von Teilnehmerstellen, die über Glasfasern und passive Koppler mit einer sämtlicher Teilnehmerstellen gemeinsamen Kopfstelle verbunden sind, bei dem
- die einer Teilnehmerstelle zugeführten oder von ihr abgegebenen Daten in Nachrichtenzellen im Zuge einer virtuellen Verbindung nach einem asynchronen Übertragungsverfahren übertragen werden,
- jede Nachrichtenzelle einen Nutzdatenteil konstanter Länge zur Aufnahme der Daten und einen dem Nutzdatenteil vorangestellten Nachrichtenzellenkopf konstanter Länge aufweist,
- für jede virtuelle Verbindung eine Nachrichtenzellenrate eingerichtet ist,
- der Zählerstand eines für jede virtuelle Verbindung kopfstellenseitig vorgesehenen Zählers nach Maßgabe der eingerichteten Nachrichtenzellenrate regelmäßig erhöht wird,
- für einen Zähler, dessen Zählerstand einen vorgegebenen Zählerstand überschreitet, ein Zustandszeichen gesetzt wird,
- die Zähler auf das Vorhandensein von gesetzten Zustandszeichen abgefragt werden,
- eine Teilnehmerstelle, deren zugehöriger Zähler bei der Abfrage ein gesetztes Zustandszeichen aufweist, eine Sendeerlaubnis für eine größtmögliche, dem jeweiligen Zählerstand entsprechende Anzahl von Nachrichtenzellen erhält, wobei der Zählerstand dieses Zählers um einen dieser Anzahl entsprechenden Betrag erniedrigt und das Zustandszeichen bei Unterschreiten des vorgegebenen Zählerstandes zurückgesetzt wird und
- eine Teilnehmerstelle, die eine Sendeerlaubnis erhalten hat, eine Folge von Einmeßzeichen und unmittelbar daran anschließend eine der jeweiligen Sendeerlaubnis entsprechende Anzahl von Nachrichtenzellen zur Kopfstelle hin aussendet.

2. Verfahren nach Anspruch 1, bei dem
die größtmögliche Anzahl von Nachrichtenzellen durch einen festgesetzten Maximalwert begrenzt ist.

3. Verfahren nach Anspruch 1 oder 2, bei dem
die Zähler zyklisch abgefragt werden.

4. Verfahren nach Anspruch 3, bei dem,
ausgehend von dem Zähler, für dessen Teilnehmerstelle zuletzt eine Sendeerlaubnis erteilt wurde, bei einmaliger zyklischer Abfrage aller übrigen Zähler kein gesetztes Zustandszeichen ermittelt wurde, für diese Teilnehmerstelle eine Sendeerlaubnis für eine zusätzliche Nachrichtenzelle erteilt wird, ohne daß der zugehörige Zählerstand entsprechend erniedrigt wird.

5. Verfahren nach einem der vorstehenden Ansprüche, bei dem der vorgegebene Zählerstand dem zeitlichen Abstand zweier mit der jeweiligen Nachrichtenzellenrate aufeinanderfolgender Nachrichtenzellen entspricht.

6. Verfahren nach einem der vorstehenden Ansprüche, bei dem
für jede Teilnehmerstelle in regelmäßigen, ein Vielfaches der Übertragungsdauer einer Nachrichtenzelle umfassenden Zeitabständen eine teilnehmerstellenindividuelle Verzögerungseinrichtung eingemessen wird.

7. Verfahren nach Anspruch 6, bei dem
die Verzögerungseinrichtung in regelmäßigen Zeitabständen, die eine Größenordnung von einer Sekunde haben, eingemessen wird.

8. Verfahren nach einem der vorstehenden Ansprüche, bei dem
eine Teilnehmerstelle, in der keine der Sendeerlaubnis entsprechende Anzahl von mit Daten gefüllten Nachrichtenzellen bereitsteht, eine sich aus der Differenz zwischen der Anzahl entsprechend der Sendeerlaubnis und der Anzahl der mit Daten gefüllten Nachrichtenzellen ergebende Anzahl von Leerzellen aussendet.

9. Verfahren nach einem der vorstehenden Ansprüche, bei dem
das Übertragungssystem Nachrichtenzellen an ein Nachrichtenzellen nach einem asynchronen Übertragungsverfahren mit der gleichen Transportbitrate durchschaltendes Vermittlungssystem weiterleitet.

10. Verfahren nach Anspruch 9, bei dem
die Summe der eingerichteten Nachrichtenzellenraten kleiner als die maximal mögliche Summe solcher Nachrichtenzellenraten ist.

11. Verfahren nach einem der vorstehenden Ansprüche, bei dem
die Erhöhung und die Erniedrigung der Zählerstände der einzelnen Zähler durch zwei voneinander unabhängige Prozeduren bewirkt wird.
